# EUROPEAN PATENT SPECIFICATION

(11) **EP 2 843 344 B1**
(45) Date of publication and mention of the grant of the patent: **16.05.2018**
(21) Application number: 14181794.0
(22) Date of filing: 21.08.2014
(51) Int. Cl.: F28F 1/30, F28F 1/32

(54) **Heat exchanger and heat exchanger manufacturing method**
Wärmetauscher und Wärmetauscherherstellungsverfahren
Échangeur de chaleur et procédé de fabrication d'échangeur de chaleur

(30) Priority: 26.08.2013 JP 2013174914
(43) Date of publication of application: 04.03.2015
(73) Proprietor: MITSUBISHI HEAVY INDUSTRIES, LTD., Tokyo 108-8215 (JP)
(72) Inventor: Hara, Nobuhide, Tokyo, 108-8215 (JP); Tanimoto, Koichi, Tokyo, 108-8215 (JP); Yoshida, Yoshihiko, Tokyo, 108-8215 (JP); Sakaguchi, Yukihiro, Tokyo, 108-8215 (JP); Yoshioka, Masahiro, TOKYO, 108-8215 (JP); Ogata, Fumikazu, Tokyo, 108-8215 (JP)
(74) Representative: Intès, Didier Gérard André

(56) References cited:
- EP-A1- 1 696 196
- WO-A1-01/79776
- GB-A- 590 715
- JP-A- 2011 220 554
- US-A- 3 407 874

## Description

### Field

The present invention relates to a heat exchanger equipped with heat transfer tubes and fins, and a heat exchanger manufacturing method.

### Background

Conventionally, a fin-and-tube type heat exchanger has been known as a heat exchanger (for example, see Patent Literature 1). The heat exchanger is configured such that, with respect to a plurality of fins arranged in parallel with a certain distance therebetween, a plurality of heat transfer tubes are inserted into the assembling holes formed in the fins, and the tubes are expanded. Here, the outer peripheral surfaces of the heat transfer tubes are applied with adhesive resin, with which the heat transfer tubes and the fins are fixedly attached.

### Citation List

### Patent Literature

Patent Literature 1: Japanese Patent Application Laid-open No. 2012-52747

EP1696196, which is considered to be the closest prior art, discloses a heat exchanger having the features in the preamble of claim 1. US3407874 and GB590715 disclose heat exchangers.

### Summary

### Technical Problem

However, in the heat exchanger described in Patent Literature 1, when the heat transfer tube is inserted into the assembling hole, the heat transfer tube and the assembling hole may be brought into contact with each other so that the adhesive resin applied to the heat transfer tube may be peeled. In that case, the adhesion between the heat transfer tube and the fin is deteriorated, which results in lowering of their heat-transfer coefficient.

In view of the above, an object of the present invention is to provide a heat exchanger and a heat exchanger manufacturing method capable of preventing peeling of adhesive and preventing deterioration in adhesion between heat transfer tubes and a fin.

### Solution to Problem

According to an aspect of the present invention defined by claim 1, a heat exchanger includes: a heat transfer tube; a plurality of fins that includes ark-shaped contact surfaces configured to be brought into contact with an outer peripheral surface of the heat transfer tube and are attached from an outside in a radial direction of the heat transfer tube; and an adhesive that bonds the outer peripheral surface of the heat transfer tube and the contact surface of each of the fins.

According to this configuration, the fin can be bonded to the heat transfer tubes from the outside in a radial direction of the heat transfer tube. As a result, as the heat transfer tubes are not inserted into the fin, peeling of the adhesive due to insertion can be avoided, whereby it is possible to prevent deterioration in adhesion between the heat transfer tube and the fin. Thereby, it is possible to prevent lowering of the heat-transfer coefficient between the heat transfer tube and the fin.

In the heat exchanger, the plurality of the fins include a pair of the fins disposed adjacently between which the heat transfer tube is interposed, in an orthogonal plane orthogonal to the tube axis direction of the heat transfer tube, and assuming, on the orthogonal plane, that a direction in which the pair of the fins are adjacent to each other is a width direction and that a direction orthogonal to the width direction is a length direction, one of the pair of fins and the other one of the pair of fins are disposed by being shifted in position in the length direction.

According to this configuration, by setting an end portion in the length direction of one fin and an end portion in the length direction of the other fin at different positions in the length direction, a difference in level is formed. Similarly, by setting one fin and the other fin at different positions in the tube axis direction, a difference in level is formed. As a result, with the formed differences in level, it is possible to cause the fluid flowing around the difference in level to be a turbulent flow, which promotes heat exchange. Thereby, the heat-transfer coefficient can be improved.

Advantageously, in the heat exchanger, the plurality of the fins include a pair of the fins disposed adjacently between which the heat transfer tube is interposed, in the orthogonal plane orthogonal to the tube axis direction of the heat transfer tube, and assuming, on the orthogonal plane, that a direction in which the pair of the fins are adjacent to each other is a width direction and that a direction orthogonal to the width direction is a length direction, one of the pair of fins and the other one of the pair of fins are configured such that end portions in the width direction, which are adjacent to each other, overlap each other in the tube axis direction.

According to this configuration, a portion of one fin and a portion of the other fin can be overlapped. As such, with the overlapped portion, it is possible to cause the fluid flowing around the overlapped portion to be a turbulent flow, which promotes heat exchange. Thereby, the heat-transfer coefficient can be improved.

Advantageously, in the heat exchanger, the plurality of the fins include a pair of the fins disposed adjacently between which the heat transfer tube is interposed, in an orthogonal plane orthogonal to the tube axis direction of the heat transfer tube, and assuming, on the orthogonal plane, that a direction in which the pair of the fins are adjacent to each other is a width direction and that a direction orthogonal to the width direction is a length direction, one of the pair of fins and the other one of the pair of fins are configured such that in the orthogonal plane, end portions in the width direction, which are adjacent to each other, face each other with a predetermined clearance gap.

According to this configuration, a clearance gap can be formed between one fin and the other fin. As a result, with the clearance gap, it is possible to cause the fluid flowing around the clearance gap to be a turbulent flow, which promotes heat exchange. Thereby, the heat-transfer coefficient can be improved.

Advantageously, in the heat exchanger, the plurality of the fins are disposed at predetermined intervals in the tube axis direction of the heat transfer tube, and the heat exchanger further includes a position regulation portion provided between the fins adjacent to each other in the tube axis direction, the position regulation portion regulating a position in the tube axis direction of each of the fins.

According to this configuration, as the position in the tube axis direction of the fin can be regulated by the position regulation portion, resistant to earthquakes can be improved.

Advantageously, in the heat exchanger, the position regulation portion is formed of the adhesive.

According to this configuration, as the position regulation portion can be formed using the adhesive, bonding of the heat transfer tube and the fin and positional regulation of the fin can be performed. As a result, the adhesive can be utilized effectively.

According to another aspect of the present invention defined by claim 6, a heat exchanger manufacturing method includes: a fin disposing step for disposing a plurality of fins at predetermined intervals in a tube axis direction of a heat transfer tube, each of the fins having ark-shaped contact surfaces configured to be brought into contact with an outer peripheral surface of the heat transfer tube; an adhesive applying step for applying an adhesive to at least one of the outer peripheral surface of the heat transfer tube and the contact surface of each of the fins; and a bonding step for bonding the plurality of the fins from an outside in a radial direction of the heat transfer tube.

According to this configuration, the fin can be bonded to the heat transfer tubes from the outside in a radial direction of the heat transfer tube. As a result, as the heat transfer tubes are not inserted into the fin, peeling of the adhesive due to insertion can be avoided, whereby it is possible to prevent deterioration in adhesion between the heat transfer tube and the fin. Thereby, it is possible to prevent lowering of the heat-transfer coefficient between the heat transfer tube and the fin.

Advantageously, in the heat exchanger manufacturing method, the adhesive applying step includes applying the adhesive to the outer peripheral surface of the heat transfer tube.

According to this configuration, as it is only necessary to apply the adhesive only to the heat transfer tube, the adhesive can be applied easily. In this case, it is effective for a heat exchanger in which the interval between the fins is narrow.

Advantageously, in the heat exchanger manufacturing method, the adhesive applying step includes applying the adhesive to the contact surface of each of the fins.

According to this configuration, as the adhesive is not applied to an unnecessary portion where the heat transfer tube and the fin are not brought into contact with each other, it is possible to prevent an increase in contact thermal resistance caused by application of the adhesive to the unnecessary portion.

### Brief Description of Drawings

FIG. 1 is a perspective view schematically illustrating a heat exchanger according to a first embodiment.
FIG. 2 is a cross-sectional view taken along a cross section orthogonal to a tube axis direction of the heat exchanger according to the first embodiment.
FIG. 3 is a plan view of the heat exchanger according to the first embodiment.
FIG. 4 is a cross-sectional view taken along the tube axis direction of the heat exchanger according to the first embodiment.
FIG. 5 is flowchart relating to a heat exchanger manufacturing method according to the first embodiment.
FIG. 6 is a plan view of a heat exchanger according to a second embodiment.
FIG. 7 is a cross-sectional view taken along a cross section orthogonal to a tube axis direction of a heat exchanger according to a third embodiment.
FIG. 8 is a plan view of the heat exchanger according to the third embodiment.
FIG. 9 is a cross-sectional view taken along a cross section orthogonal to a tube axis direction of a heat exchanger according to a fourth embodiment.
FIG. 10 is a plan view of the heat exchanger according to the fourth embodiment.
FIG. 11 is a plan view of a heat exchanger according to a fifth embodiment.

### Description of Embodiments

Hereinafter, embodiments of the present invention will be described in detail based on the drawings. It should be noted that the invention is not limited by those embodiments. Further, the constituent elements in the embodiments described below include those easily replaceable by those skilled in the art or those which are substantially the same.

### [First embodiment]

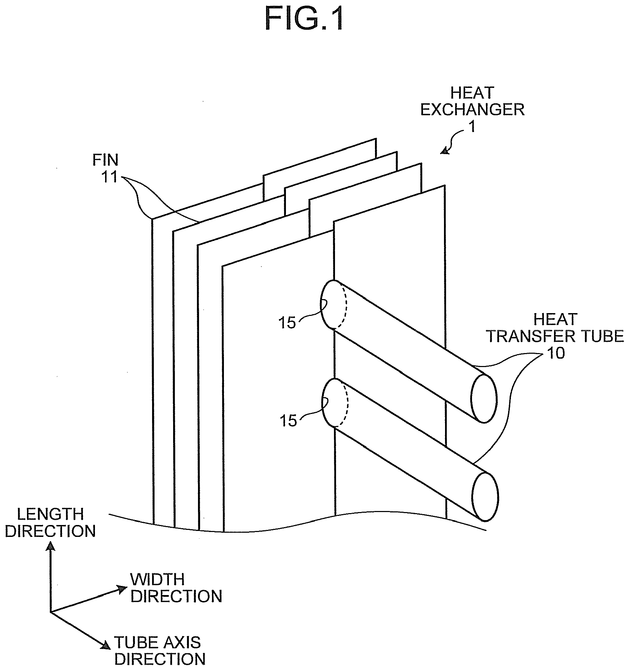

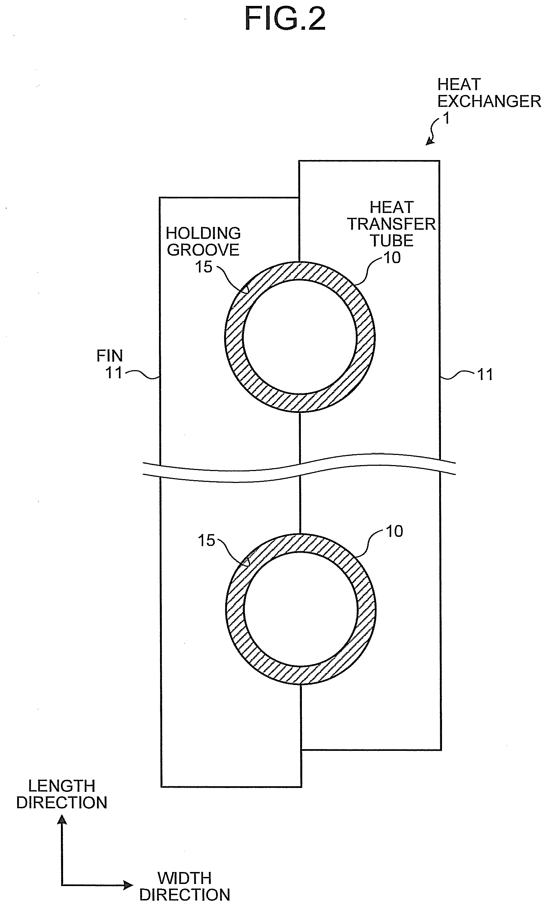

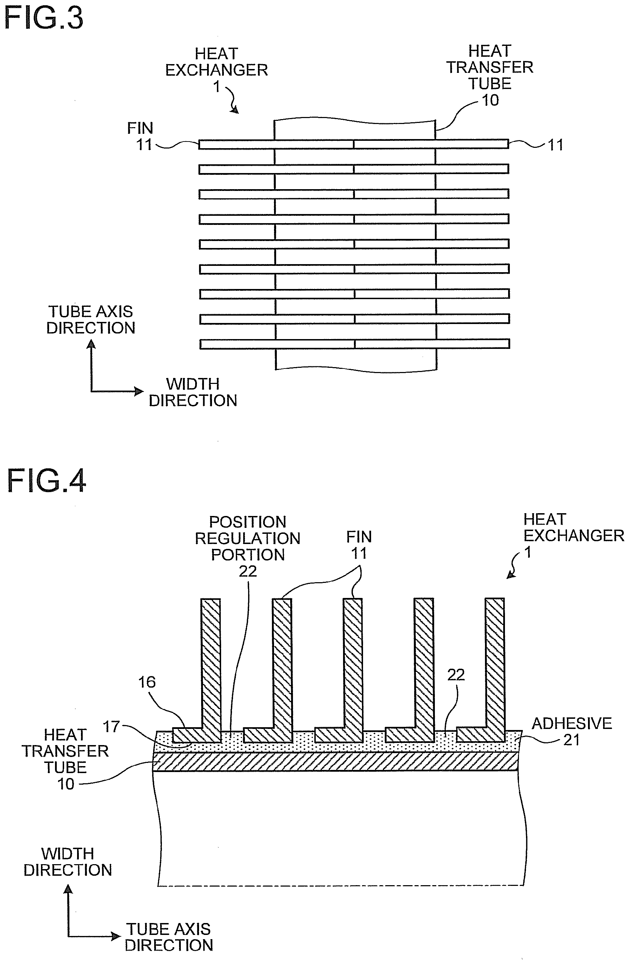

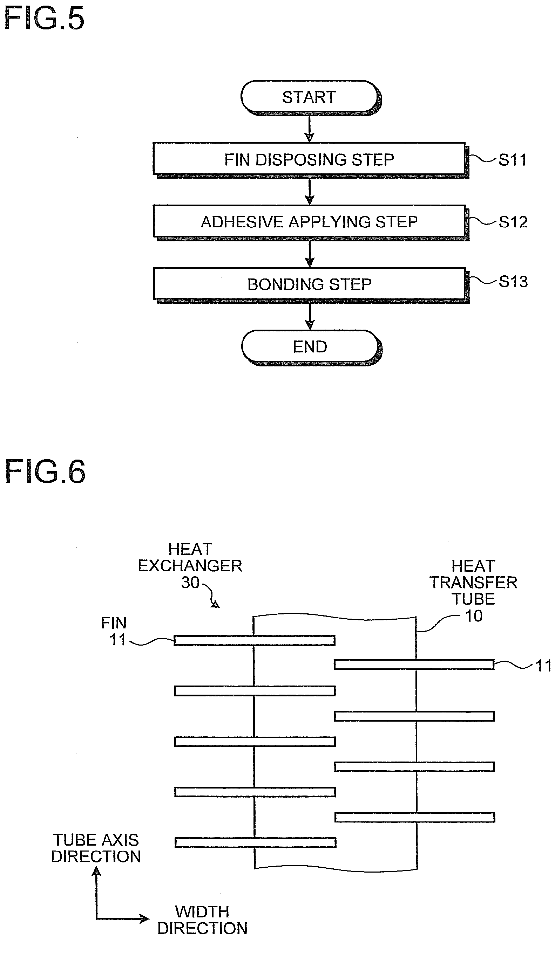

FIG. 1 is a perspective view schematically illustrating a heat exchanger according to a first embodiment. FIG. 2 is a cross-sectional view taken along a cross section orthogonal to a tube axis direction of the heat exchanger according to the first embodiment. FIG. 3 is a plan view of the heat exchanger according to the first embodiment. FIG. 4 is a cross-sectional view taken along the tube axis direction of the heat exchanger according to the first embodiment. FIG. 5 is flowchart relating to a heat exchanger manufacturing method according to the first embodiment.

A heat exchanger 1 of the first embodiment is an air-cooled heat exchanger, and is a large heat exchanger to be installed in a large-scale plant such as a power plant. The heat exchanger 1 includes heat transfer tubes 10 through which a heat medium flows, and a plurality of fins 11 bonded to the heat transfer tubes 10.

The heat transfer tubes 10 are formed using a copper tube having high heat conductivity, for example, and a plurality of heat transfer tubes 10 are disposed in a row in a predetermined direction on a cross section orthogonal to the tube axis direction (orthogonal plane). It should be noted that the heat transfer tubes 10 may be linked at end portions in the tube axis direction with use of a U-shaped pipe or the like to thereby constitute a long serpentine heat transfer tube. Further, the heat transfer tubes 10 may be linked, at the end portions in the tube axis direction thereof, to a header through which a heat medium flows, but they are not limited thereto.

The fins 11 are configured such that each of the fins 11 is formed in a plate shape, and the fins 11 are stacked in the tube axis direction of the heat transfer tube 10. Specifically, the fins 11 are arranged such that a pair of them is disposed on both sides in a radial direction between which the heat transfer tubes 10 are interposed, and pairs of the fins 11 are arranged in parallel at predetermined intervals in the tube axis direction. As such, the tube axis direction of the heat transfer tubes 10 and the stacked direction of the fins 11 are in the same direction.

Here, as shown in FIG. 2, it is assumed that in a cross section orthogonal to the tube axis direction, a direction in which a pair of fins 11 are adjacent to each other is a width direction of the fin 11, and a direction orthogonal to the width direction is a length direction of the fin 11. In that case, the length direction of the fin 11 and a direction in which the heat transfer tubes 10 are disposed in a row are the same.

Each of the plate-like fins 11 is made of aluminum, aluminum alloy, or the like, and a longer side extending in the length direction on the heat transfer tube 10 side in the width direction has a plurality of holding grooves 15, formed at predetermined intervals, for holding the heat transfer tubes 10. As shown in FIG. 4, the holding groove 15 is formed such that a marginal part thereof forms a fin collar 16 protruding from the plate surface of the fin 11. The inner peripheral surface of the fin collar 16, that is, the bottom surface of the holding groove 15, is a contact surface 17 which comes in contact with the outer peripheral surface of the heat transfer tube 10. In other words, the contact surface 17 is formed to be in an ark shape along the outer peripheral surface of the heat transfer tube 10.

Further, as shown in FIG. 2, a pair of fins 11 is disposed such that one fin 11 and the other fin 11, adjacent to each other in the width direction, are shifted in position in the length direction. This means that a pair of fins 11 are formed such that one fin 11 and the other fin 11 are in the same shape, and the other fin 11 is arranged in point symmetry by 180 degrees relative to the one fin 11 in the plate surface. In this case, in order to shift the positions of the one fin 11 and the other fin 11 in the length direction, the holding grooves 15, formed in the respective fins 11, are shifted in position in the length direction, with respect to the arrangement in which the holding grooves 15 are arranged symmetrically with respect to the center in the length direction of the fin 11. This means that the holding grooves 15 formed in the respective fins 11 are arranged bilaterally asymmetrically with respect to the center in the length direction of the fin 11. As a result, in the pair of fins 11, an end portion in the longitudinal direction of the one fin 11 and an end portion in the longitudinal direction of the other fin 11 are differently positioned in the longitudinal direction, whereby a difference in level is formed between the one fin 11 and the other fin 11.

Further, as shown in FIG. 3, a pair of fins 11 are formed such that one fin 11 and the other fin 11, adjacent to each other in the width direction, are disposed at the same position in the tube axis direction. In this case, an end portion on the heat transfer tube 10 side in the width direction of the one fin 11 and an end portion on the heat transfer tube 10 side in the width direction of the other fin 11 are brought into contact with each other. In this case, if the end portion on the heat transfer tube 10 side in the width direction of the one fin 11 and the end portion on the heat transfer tube 10 side in the width direction of the other fin 11 are brought into contact with each other, it is preferable that the contact surface 17 of the holding groove 15 in an arc shape is formed in a semicircular shape. Then, the pair of fins 11 are used as a set, and a plurality of sets of the fins 11 are disposed in a row at predetermined intervals (predetermined fin pitch) in the tube axis direction. It should be noted that while in the first embodiment, an end portion on the heat transfer tube 10 side in the width direction of one fin 11 and an end portion on the heat transfer tube 10 side in the width direction of the other fin 11 are brought into contact with each other, they may be disposed in an overlapped manner.

Between the outer peripheral surface of the heat transfer tube 10 and the contact surface 17 of the fin 11, an adhesive 21 is provided. This means that the outer peripheral surface of the heat transfer tube 10 and the contact surface 17 of the fin 11 are bonded with the adhesive 21. As the adhesive 21, various types of adhesive such as silicon-based, urethane-based, epoxy-based, or polyimide-based adhesive can be used, for example. Further, it is preferable to use the adhesive 21 having high heat conductivity. For example, a mixture of the adhesive and a metallic material is used.

As shown in FIG. 4, a position regulation portion 22 which regulates the position, in the tube axis direction, of each of the fins 11 is provided between the fins 11 adjacent to each other in the tube axis direction. Specifically, the position regulation portion 22 is provided between the fin collars 16 of the adjacent fins 11, and is formed using the adhesive 21. The position regulation portion 22 is formed such that the adhesive 21 is swollen by the pressure applied when the fin 11 is bonded to the heat transfer tubes 10.

Next, a manufacturing method for manufacturing the heat exchanger 1 will be described with reference to FIG. 5. In the case of manufacturing the heat exchanger 1, first, the fins 11 are disposed at predetermined intervals in a stacking direction (tube axis direction of the heat transfer tube 10) (S11: fin disposing step). Here, in the fin disposing step S11, among the sets of fins 11 between which the heat transfer tubes 10 are interposed, the fins 11 on one side are stacked in the tube axis direction, and the fins 11 on the other side are stacked in the tube axis direction.

Then, the adhesive 21 is applied to the outer peripheral surface of the heat transfer tube 10 (S12: adhesive applying step). Here, in the adhesive applying step S12, the adhesive 21 is applied uniformly to the outer peripheral surface of the heat transfer tube 10 so as to have a predetermined thickness which enables the position regulation portion 22 to be formed.

Then, the outer peripheral surface of the heat transfer tube 10, on which the adhesive 21 is applied, and the stacked fins 11 on the one side are bonded from the outside in the radial direction of the heat transfer tube 10. Similarly, the outer peripheral surface of the heat transfer tube 10, on which the adhesive 21 is applied, and the stacked fins 11 on the other side are bonded from the outside in the radial direction of the heat transfer tube 10 (S13: bonding step). Here, in the bonding step S13, bonding may be performed by pressing the contact surfaces 17 of the fin 11 against the outer peripheral surfaces of the heat transfer tubes 10, or bonding may be performed by pressing the outer peripheral surfaces of the heat transfer tubes 10 against the contact surfaces 17 of the fin 11. Further, the fin 11 may be bonded in a state where the heat transfer tube 10 is erected such that the tube axis direction is in a vertical direction, or the fin 11 may be bonded in a state where the heat transfer tube 10 is laid such that the tube axis direction is in a horizontal position. Then, in the bonding step S13, by bonding the heat transfer tubes 10 and the fin 11, the adhesive 21 between the fins 11 is swollen, whereby the position regulation portion 22 is formed.

As described above, according to the configuration of the first embodiment, the fin 11 can be bonded to the heat transfer tubes 10 from the outside in the radial direction of the heat transfer tube 10. As a result, as the heat transfer tubes 10 are not inserted into the fin 11, peeling of the adhesive 21 due to insertion can be avoided, whereby it is possible to prevent deterioration in adhesion between the heat transfer tube 10 and the fin 11. Thereby, it is possible to prevent lowering of the heat-transfer coefficient between the heat transfer tube 10 and the fin 11.

Further, according to the configuration of the first embodiment, by setting an end portion in the length direction of one fin 11 and an end portion in the length direction of the other fin 11 at different positions in the length direction, a difference in level can be formed. As a result, with the formed difference in level, it is possible to cause the fluid flowing around the difference in level to be a turbulent flow, which promotes heat exchange. Thereby, the heat-transfer coefficient of the heat exchanger 1 can be improved.

Further, according to the configuration of the first embodiment, as the position in the tube axis direction of the fin 11 can be regulated by the position regulation portion 22, resistant to earthquakes can be improved. This is particularly effective for the heat exchanger 1 in a large size.

Further, according to the configuration of the first embodiment, as the position regulation portion 22 can be formed using the adhesive 21, bonding of the heat transfer tube 10 and the fin 11 as well as positional regulation of the fin 11 can be performed. As a result, the adhesive 21 can be utilized effectively.

Further, according to the configuration of the first embodiment, as it is only necessary to apply the adhesive 21 only to the heat transfer tubes 10, the adhesive 21 can be applied easily.

It should be noted that while in the first embodiment the position regulation portion 22 is formed by bonding the heat transfer tubes 10 and the fin 11 and swelling the adhesive 21, the position regulation portion 22 may be formed by applying the adhesive 21 between the fins 11 after the heat transfer tubes 10 and the fin 11 are bonded.

Further, while in the first embodiment the adhesive 21 is applied to the outer peripheral surface of the heat transfer tube 10, the adhesive 21 may be applied to the contact surface 17 of the fin 11. According to this configuration, as the adhesive 21 is not applied to an unnecessary portion where the heat transfer tube 10 and the fin 11 are not brought into contact with each other, it is possible to prevent an increase in contact thermal resistance caused by application of the adhesive 21 to the unnecessary portion.

### [Second embodiment]

Next, a heat exchanger 30 according to a second embodiment will be described with reference to FIG. 6. FIG. 6 is a plan view of the heat exchanger according to the second embodiment. It should be noted that in the second embodiment, in order to avoid overlapping description with the first embodiment, only the part different from the first embodiment will be described, and the same configurations as those of the first embodiment are described using the same reference signs.

As shown in FIG. 6, in the heat exchanger 30 according to the second embodiment, the fins 11 in the first embodiment are configured such that one fin 11 and the other fin 11 are disposed by being shifted in position in the tube axis direction. As a result, the fins 11 are disposed, in the tube axis direction, such that between the fins 11 on one side, the fin 11 the other side is located. Accordingly, as the one fin 11 and the other fin 11 are located at different positions in the tube axis direction, the one fin 11 and the other fin 11 are in a stepped state, whereby a clearance gap is formed between the one fin 11 and the other fin 11.

As described above, according to the configuration of the second embodiment, the one fin 11 and the other fin 11 are located at different positions in the tube axis direction so as to be in a stepped state, whereby a clearance gap is formed. As a result, with the formed clearance gap, it is possible to cause the fluid flowing around the clearance gap to be a turbulent flow, which promotes heat exchange. Thereby, the heat-transfer coefficient of the heat exchanger 30 can be improved.

### [Third embodiment]

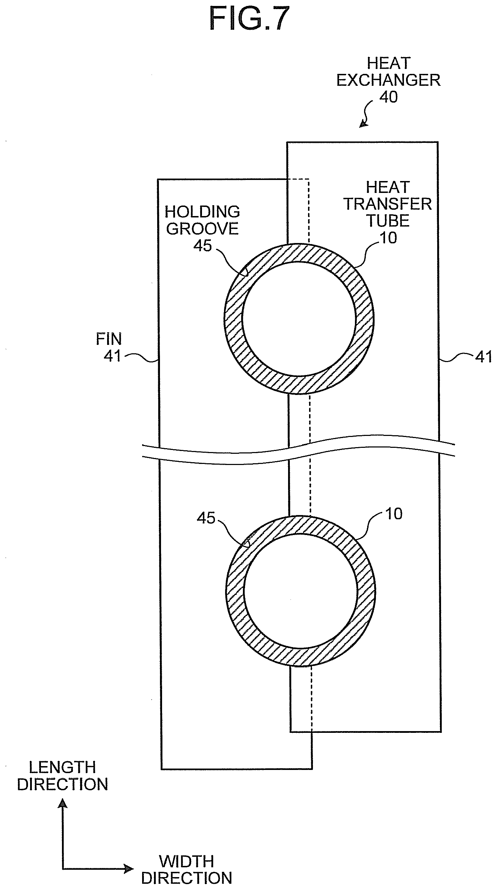

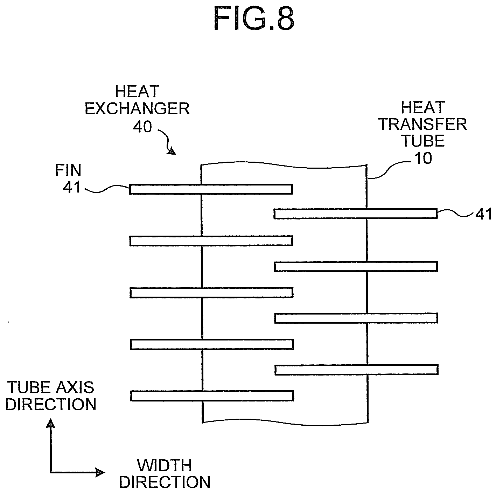

Next, a heat exchanger 40 according to a third embodiment will be described with reference to FIG. 7 and FIG. 8. FIG. 7 is a cross-sectional view taken along a cross section orthogonal to the tube axis direction of the heat exchanger according to the third embodiment. FIG. 8 is a plan view of the heat exchanger according to the third embodiment. It should be noted that, also in the third embodiment, in order to avoid overlapping description with the other embodiments, only the part different from the other embodiments will be described, and the same configurations as those of the other embodiments are described using the same reference signs.

As shown in FIG. 7 an FIG. 8, in the heat exchanger 40 according to the third embodiment, a pair of fins 41 disposed on both sides in a width direction, between which the heat transfer tubes 10 are interposed, are configured such that an end portion in the width direction of one fin 41 and an end portion in the width direction of the other fin 41, which are adjacent to each other, overlap in the tube axis direction in a cross section orthogonal to the tube axis direction.

Specifically, as shown in FIG. 7, a pair of fins 41 in the third embodiment are disposed such that an end portion on the heat transfer tube 10 side in the width direction of one fin 41 and an end portion on the heat transfer tube 10 side in the width direction of the other fin 41 overlap. Here, in the case of overlapping the end portion on the heat transfer tube 10 side in the width direction of the one fin 41 and the end portion on the heat transfer tube 10 side in the width direction of the other fin 41, it is preferable that a contact surface 17 of a holding groove 45 in an ark shape is in a shape in which its circumferential length is longer than that of a semicircle.

Further, as shown in FIG. 7, the pair of fins 41 is configured such that the one fin 41 and the other fin 41, adjacent to each other in the width direction, are disposed by being shifted in position in the length direction. As shown in FIG. 8, the one fin 41 and the other fin 41, adjacent to each other in the width direction, are disposed by being shifted in position in the tube axis direction.

As described above, according to the configuration of the third embodiment, portions of the one fin 41 and the other fin 41 can be overlapped. As a result, with the overlapped portion, it is possible to cause the fluid flowing around the overlapped portion to be a turbulent flow, which promotes heat exchange. Thereby, the heat-transfer coefficient of the heat exchanger 40 can be improved.

### [Fourth embodiment]

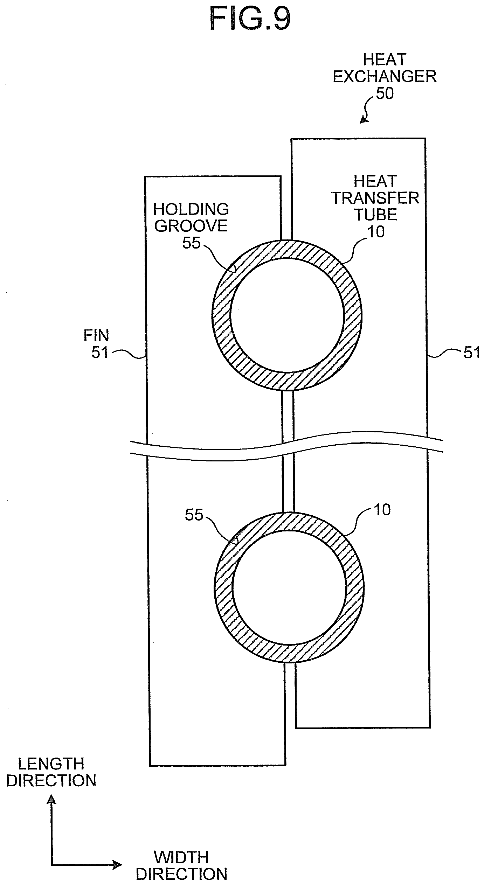

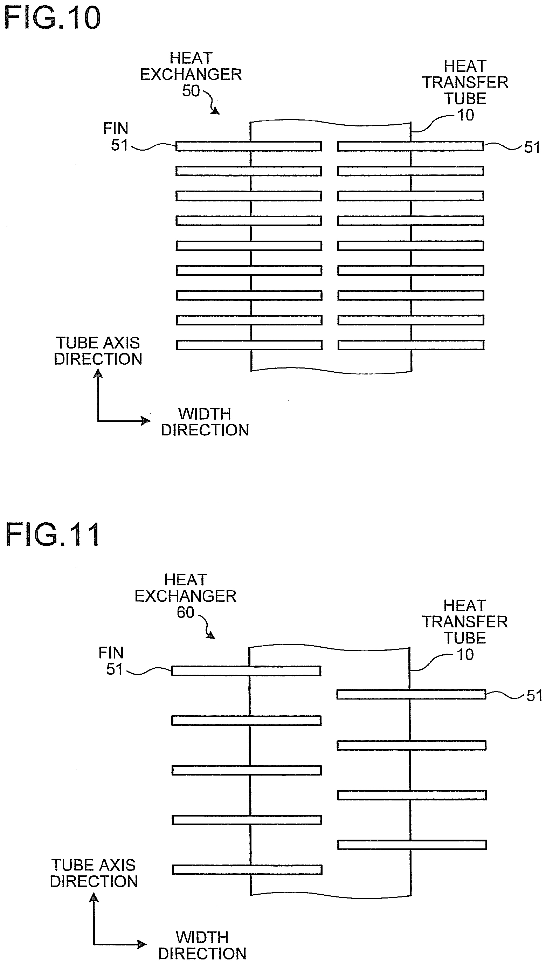

Next, a heat exchanger 50 according to a fourth embodiment will be described with reference to FIG. 9 and FIG. 10. FIG. 9 is a cross-sectional view taken along a cross section orthogonal to the tube axis direction of the heat exchanger according to the fourth embodiment. FIG. 10 is a plan view of the heat exchanger according to the fourth embodiment. It should be noted that, also in the fourth embodiment, in order to avoid overlapping description with the other embodiments, only the part different from the other embodiments will be described, and the same configurations as those of the other embodiments are described using the same reference signs.

As shown in FIG. 9 and FIG. 10, in the heat exchanger 50 according to the fourth embodiment, a pair of fins 51 disposed on both sides in a width direction, between which the heat transfer tubes 10 are interposed, are configured such that one fin 51 and the other fin 51 are disposed with a predetermined clearance gap in the cross section orthogonal to the tube axis direction.

Specifically, as shown in FIG. 9, the pair of fins 51 in the fourth embodiment are disposed such that an end portion on the heat transfer tube 10 side in the width direction of one fin 51 and an end portion on the heat transfer tube 10 in the width direction of the other fin 41 are disposed so as to face each other with a predetermined clearance gap. Here, in the case of setting a clearance gap between the end portion on the heat transfer tube 10 side in the width direction of the one fin 51 and the end portion on the heat transfer tube 10 in the width direction of the other fin 51, it is preferable that a contact surface 17 of a holding groove 55 in an ark shape is in a shape in which its circumferential length is shorter than that of a semicircle.

Further, as shown in FIG. 9, the pair of fins 51 is disposed such that the one fin 51 and the other fin 51, adjacent to each other in the width direction, are shifted in position in the length direction. Meanwhile, as shown in FIG. 10, the pair of fins 51 is disposed such that the one fin 51 and the other fin 51, adjacent to each other in the width direction, are disposed at the same position in the tube axis direction.

As described above, according to the configuration of the fourth embodiment, a clearance gap can be formed between the one fin 51 and the other fin 51. As a result, with the clearance gap, it is possible to cause the fluid flowing around the clearance gap to be a turbulent flow, which promotes heat exchange. Thereby, the heat-transfer coefficient of the heat exchanger 50 can be improved.

### [Fifth embodiment]

Next, a heat exchanger 60 according to a fifth embodiment will be described with reference to FIG. 11. FIG. 11 is a plan view of the heat exchanger according to the fifth embodiment. It should be noted that, also in the fifth embodiment, in order to avoid overlapping description with the other embodiments, only the part different from the other embodiments will be described, and the same configurations as those of the other embodiments are described using the same reference signs.

As shown in FIG. 11, in the heat exchanger 60 according to the fifth embodiment, the fins 51 of the fourth embodiment are disposed such that the one fin 51 and the other fin 51 are shifted in position in the tube axis direction. As a result, the fins 51 are configured such that between the fins 51 on the one side, the fin 51 on the other side is positioned, in the tube axis direction. Accordingly, as the one fin 51 and the other fin 51 are located at different positions in the tube axis direction, the one fin 51 and the other fin 51 are in a stepped state, whereby a clearance gap is formed between the one fin 51 and the other fin 51.

As described above, according to the configuration of the fifth embodiment, the one fin 51 and the other fin 51 are located at different positions in the tube axis direction so as to be in a stepped state, whereby a clearance gap is formed. As a result, with the formed clearance gap, it is possible to cause the fluid flowing around the clearance gap to be a turbulent flow, which promotes heat exchange. Thereby, the heat-transfer coefficient of the heat exchanger 60 can be improved.

It should be noted that while, in the second to fifth embodiments, the fins 11, 41, 51 on one side and the fins 11, 41, 51 on the other side are shifted in position in the length direction, in that case, the fin 11 on the one side and the fin 11 on the other side may be at the same position in the length direction, or may be at different positions, in other words, they are not limited thereto. Further, the heat exchangers 1, 30, 40, 50, and 60 described in the first embodiment to the fifth embodiment may be combined appropriately.

### Reference Signs List

- 1: HEAT EXCHANGER
- 10: HEAT TRANSFER TUBE
- 11: FIN
- 15: HOLDING GROOVE
- 16: FIN COLLAR
- 17: CONTACT SURFACE
- 21: ADHESIVE
- 22: POSITION REGULATION PORTION
- 30: HEAT EXCHANGER (SECOND EMBODIMENT)
- 40: HEAT EXCHANGER (THIRD EMBODIMENT)
- 41: FIN (THIRD EMBODIMENT)
- 45: HOLDING GROOVE (THIRD EMBODIMENT)
- 50: HEAT EXCHANGER (FOURTH EMBODIMENT)
- 51: FIN (FOURTH EMBODIMENT)
- 55: HOLDING GROOVE (FOURTH EMBODIMENT)
- 60: HEAT EXCHANGER (FIFTH EMBODIMENT)

## Claims

1. A heat exchanger (1; 30; 40; 50; 60) comprising:
a heat transfer tube (10);
a plurality of fins (11; 41; 51) that includes ark-shaped contact surfaces (17) configured to be brought into contact with an outer peripheral surface of the heat transfer tube (10) and are attached from an outside in a radial direction of the heat transfer tube (10); and
an adhesive (21) that bonds the outer peripheral surface of the heat transfer tube (10) and the contact surfaces (17) of each of the fins (11; 41; 51),
wherein the plurality of the fins (11; 41; 51) include a pair of the fins (11; 41; 51) disposed adjacently between which the heat transfer tube (10) is interposed, in an orthogonal plane orthogonal to the tube axis direction of the heat transfer tube (10),
**characterized in that**, assuming, on the orthogonal plane, that a direction in which the pair of the fins (11; 41; 51) are adjacent to each other is a width direction and that a direction orthogonal to the width direction is a length direction, one of the pair of fins (11; 41; 51) and the other one of the pair of fins (11; 41; 51) are disposed by being shifted in position in the length direction.

2. The heat exchanger (1; 30; 40; 50; 60) according to Claim 1, wherein
one of the pair of fins (11; 41; 51) and the other one of the pair of fins (11; 41; 51) are configured such that end portions in the width direction, which are adjacent to each other, overlap each other in the tube axis direction.

3. The heat exchanger (1; 30; 40; 50; 60) according to Claim 1, wherein
one of the pair of fins (11; 41; 51) and the other one of the pair of fins (11; 41; 51) are configured such that in the orthogonal plane, end portions in the width direction, which are adjacent to each other, face each other with a predetermined clearance gap.

4. The heat exchanger (1; 30; 40; 50; 60) according to any one of Claims 1 to 3, wherein
the plurality of the fins (11; 41; 51) are disposed at predetermined intervals in the tube axis direction of the heat transfer tube (10), and
the heat exchanger (1; 30; 40; 50; 60) further comprises a position regulation portion (22) provided between the fins (11; 41; 51) adjacent to each other in the tube axis direction, the position regulation portion (22) regulating a position in the tube axis direction of each of the fins (11; 41; 51).

5. The heat exchanger (1; 30; 40; 50; 60) according to Claim 4, wherein
the position regulation portion (22) is formed of the adhesive (21).

6. A heat exchanger manufacturing method to manufacture a heat exchanger as defined in claim 1 comprising:
a fin disposing step for disposing a plurality of fins (11; 41; 51) at predetermined intervals in a tube axis direction of a heat transfer tube (10), each of the fins (11; 41; 51) having ark-shaped contact surfaces (17) configured to be brought into contact with an outer peripheral surface of the heat transfer tube (10);
an adhesive applying step for applying an adhesive (21) to at least one of the outer peripheral surface of the heat transfer tube (10) and the contact surfaces (17) of each of the fins (11; 41; 51); and
a bonding step for bonding the plurality of the fins (11; 41; 51) from an outside in a radial direction of the heat transfer tube (10);
arranging a pair of the fins (11; 41; 51) disposed adjacently between which the heat transfer tube (10) is interposed, in an orthogonal plane orthogonal to the tube axis direction of the heat transfer tube (10),
**characterized in that**, assuming, on the orthogonal plane, that a direction in which the pair of the fins (11; 41; 51) are adjacent to each other is a width direction and that a direction orthogonal to the width direction is a length direction, disposing one of the pair of fins (11; 41; 51) and the other one of the pair of fins (11; 41; 51) by being shifted in position in the length direction.

7. The heat exchanger manufacturing method according to Claim 6, wherein
the adhesive applying step includes applying the adhesive (21) to the outer peripheral surface of the heat transfer tube (10).

8. The heat exchanger manufacturing method according to Claim 6, wherein
the adhesive applying step includes applying the adhesive (21) to the contact surfaces (17) of each of the fins (11; 41; 51).

## Patentansprüche

1. Wärmetauscher (1; 30; 40; 50; 60), umfassend:
eine Wärmeübertragungsröhre (10),
mehrere Rippen (11; 41; 51), die bogenförmige Kontaktflächen (17) enthalten, die dafür konfiguriert sind, mit einer Außenumfangsfläche der Wärmeübertragungsröhre (10) in Kontakt gebracht zu werden, und von einer Außenseite in einer radialen Richtung der Wärmeübertragungsröhre (10) angebracht sind, und
einen Klebstoff (21), der die Außenumfangsfläche der Wärmeübertragungsröhre (10) und die Kontaktflächen (17) einer jeden der Rippen (11; 41; 51) verbindet,
wobei die mehreren der Rippen (11; 41; 51) ein Paar der Rippen (11; 41; 51), die nebeneinander angeordnet sind und zwischen denen die Wärmeübertragungsröhre (10) angeordnet ist, in einer orthogonalen Ebene orthogonal zu der Röhrenachsenrichtung der Wärmeübertragungsröhre (10) enthalten,
**dadurch gekennzeichnet, dass**, unter der Annahme, dass auf der orthogonalen Ebene eine Richtung, in der das Paar der Rippen (11; 41; 51) nebeneinander liegt, eine Breitenrichtung ist und dass eine Richtung orthogonal zu der Breitenrichtung eine Längsrichtung ist, eine des Paares von Rippen (11; 41; 51) und die andere des Paares von Rippen (11; 41; 51) so angeordnet sind, dass ihre Position in der Längsrichtung versetzt ist.

2. Wärmetauscher (1; 30; 40; 50; 60) nach Anspruch 1, wobei
eine des Paares von Rippen (11; 41; 51) und die andere des Paares von Rippen (11; 41; 51) so konfiguriert sind, dass Endabschnitte in der Breitenrichtung, die nebeneinander liegen, einander in der Röhrenachsenrichtung überlappen.

3. Wärmetauscher (1; 30; 40; 50; 60) nach Anspruch 1, wobei
eine des Paares von Rippen (11; 41; 51) und die andere des Paares von Rippen (11; 41; 51) so konfiguriert sind, dass in der orthogonalen Ebene Endabschnitte in der Breitenrichtung, die nebeneinander liegen, einander mit einem zuvor festgelegten Trennspalt zugewandt sind.

4. Wärmetauscher (1; 30; 40; 50; 60) nach einem der Ansprüche 1 bis 3, wobei
die mehreren der Rippen (11; 41; 51) in zuvor festgelegten Intervallen in der Röhrenachsenrichtung der Wärmeübertragungsröhre (10) angeordnet sind und
der Wärmetauscher (1; 30; 40; 50; 60) ferner einen Positionsfestlegabschnitt (22) umfasst, der zwischen den nebeneinander in der Röhrenachsenrichtung liegenden Rippen (11; 41; 51) angeordnet ist, wobei der Positionsfestlegabschnitt (22) eine Position in der Röhrenachsenrichtung einer jeden der Rippen (11; 41; 51) festlegt.

5. Wärmetauscher (1; 30; 40; 50; 60) nach Anspruch 4, wobei der Positionsfestlegabschnitt (22) aus dem Klebstoff (21) gebildet ist.

6. Wärmetauscherherstellungsverfahren zum Herstellen eines Wärmetauschers nach Anspruch 1, umfassend:
einen Rippenanordnungsschritt zum Anordnen mehrerer Rippen (11; 41; 51) in zuvor festgelegten Intervallen in einer Röhrenachsenrichtung einer Wärmeübertragungsröhre (10), wobei jede der Rippen (11; 41; 51) bogenförmige Kontaktflächen (17) aufweist, die dafür konfiguriert sind, mit einer Außenumfangsfläche der Wärmeübertragungsröhre (10) in Kontakt gebracht zu werden,
einen Klebstoffauftragungsschritt zum Auftragen eines Klebstoffs (21) auf wenigstens eine von der Außenumfangsfläche der Wärmeübertragungsröhre (10) und den Kontaktflächen (17) einer jeden der Rippen (11; 41; 51), und
einen Bondungsschritt zum Bonden der mehreren der Rippen (11; 41; 51) von einer Außenseite in einer radialen Richtung der Wärmeübertragungsröhre (10),
Anordnen eines Paares der Rippen (11; 41; 51), die nebeneinander angeordnet sind und zwischen denen die Wärmeübertragungsröhre (10) angeordnet ist, in einer orthogonalen Ebene orthogonal zu der Röhrenachsenrichtung der Wärmeübertragungsröhre (10),
**dadurch gekennzeichnet, dass**, unter der Annahme, dass auf der orthogonalen Ebene eine Richtung, in der das Paar der Rippen (11; 41; 51) nebeneinander liegt, eine Breitenrichtung ist und dass eine Richtung orthogonal zu der Breitenrichtung eine Längsrichtung ist, eine des Paares von Rippen (11; 41; 51) und die andere des Paares von Rippen (11; 41; 51) so angeordnet sind, dass ihre Position in der Längsrichtung versetzt ist.

7. Wärmetauscherherstellungsverfahren nach Anspruch 6, wobei
der Klebstoffauftragungsschritt das Auftragen des Klebstoffs (21) auf die Außenumfangsfläche der Wärmeübertragungsröhre (10) enthält.

8. Wärmetauscherherstellungsverfahren nach Anspruch 6, wobei
der Klebstoffauftragungsschritt das Auftragen des Klebstoffs (21) auf die Kontaktflächen (17) einer jeden der Rippen (11; 41; 51) enthält.

## Revendications

1. Échangeur de chaleur (1 ; 30 ; 40 ; 50 ; 60) comprenant :
un tube de transfert de chaleur (10) ;
une pluralité d'ailettes (11 ; 41 ; 51) qui comprend des surfaces de contact en forme d'arche (17) configurées pour être amenées en contact avec une surface périphérique externe du tube de transfert de chaleur (10) et sont fixées à partir d'un extérieur dans une direction radiale du tube de transfert de chaleur (10) ; et
un adhésif (21) qui relie la surface périphérique externe du tube de transfert de chaleur (10) et les surfaces de contact (17) de chacune des ailettes (11 ; 41 ; 51),
dans lequel la pluralité des ailettes (11 ; 41 ; 51) comprend une paire d'ailettes (11 ; 41 ; 51) disposées de manière adjacente, entre lesquelles est intercalé le tube de transfert de chaleur (10), dans un plan orthogonal, orthogonal à la direction d'axe de tube du tube de transfert de chaleur (10),
**caractérisé en ce que**, en supposant, sur le plan orthogonal, qu'une direction dans laquelle les ailettes de la paire d'ailettes (11 ; 41 ; 51) sont adjacentes entre elles, est une direction de largeur et qu'une direction orthogonale à la direction de largeur est une direction de longueur, l'une des ailettes de la paire d'ailettes (11 ; 41 ; 51) et l'autre des ailettes de la paire d'ailettes (11 ; 41 ; 51) sont disposées en étant décalées du point de vue de la position dans la direction de longueur.

2. Échangeur de chaleur (1 ; 30 ; 40 ; 50 ; 60) selon la revendication 1, dans lequel :
l'une des ailettes de la paire d'ailettes (11 ; 41 ; 51) et l'autre des ailettes de la paire d'ailettes (11 ; 41 ; 51) sont configurées de sorte que les parties d'extrémité dans la direction de largeur, qui sont adjacentes entre elles, se chevauchent dans la direction d'axe de tube.

3. Échangeur de chaleur (1 ; 30 ; 40 ; 50 ; 60) selon la revendication 1, dans lequel :
l'une des ailettes de la paire d'ailettes (11 ; 41 ; 51) et l'autre des ailettes de la paire d'ailettes (11 ; 41 ; 51) sont configurés de sorte que dans le plan orthogonal, les parties d'extrémité dans la direction de largeur, qui sont adjacentes entre elles, se font face avec un espace de jeu prédéterminé.

4. Échangeur de chaleur (1 ; 30 ; 40 ; 50 ; 60) selon l'une quelconque des revendications 1 à 3, dans lequel :
la pluralité d'ailettes (11 ; 41 ; 51) sont disposées à intervalles prédéterminés dans la direction d'axe de tube du tube de transfert de chaleur (10), et
l'échangeur de chaleur (1 ; 30 ; 40 ; 50 ; 60) comprend en outre une partie de régulation de position (22) prévue entre les ailettes (11 ; 41 ; 51) adjacentes entre elles dans la direction d'axe de tube, la partie de régulation de position (22) régulant une position dans la direction d'axe de tube de chacune des ailettes (11 ; 41 ; 51).

5. Échangeur de chaleur (1 ; 30 ; 40 ; 50 ; 60) selon la revendication 4, dans lequel :
la partie de régulation de position (22) est formée avec l'adhésif (21).

6. Procédé de fabrication d'échangeur de chaleur pour fabriquer un échangeur de chaleur selon la revendication 1, comprenant :
une étape de disposition d'ailette pour disposer une pluralité d'ailettes (11 ; 41 ; 51) à intervalles prédéterminés dans une direction d'axe de tube d'un tube de transfert de chaleur (10), chacune des ailettes (11 ; 41 ; 51) ayant des surfaces de contact en forme d'arche (17) configurées pour être amenées en contact avec une surface périphérique externe du tube de transfert de chaleur (10) ;
une étape d'application d'adhésif pour appliquer un adhésif (21) sur au moins l'une de la surface périphérique externe du tube de transfert de chaleur (10) et des surfaces de contact (17) de chacune des ailettes (11 ; 41 ; 51) ; et
une étape de liaison pour relier la pluralité d'ailettes (11 ; 41 ; 51) depuis un extérieur dans une direction radiale du tube de transfert de chaleur (10) ;
agencer une paire d'ailettes (11 ; 41 ; 51) disposées de manière adjacente, entre lesquelles le tube de transfert de chaleur (10) est intercalé, dans un plan orthogonal, orthogonal par rapport à la direction d'axe de tube du tube de transfert de chaleur (10),
**caractérisé en ce que**, en supposant, sur le plan orthogonal, qu'une direction dans laquelle les ailettes de la paire d'ailettes (11 ; 41 ; 51) sont adjacentes entre elles, est une direction de largeur et qu'une direction orthogonale à la direction de largeur est une direction de longueur, l'une des ailettes de la paire d'ailettes (11 ; 41 ; 51) et l'autre des ailettes de la paire d'ailettes (11 ; 41 ; 51) sont disposées en étant décalées du point de vue de la position dans la direction de longueur.

7. Procédé pour fabriquer un échangeur de chaleur selon la revendication 6, dans lequel
l'étape d'application d'adhésif comprend l'application de l'adhésif (21) sur la surface périphérique externe du tube de transfert de chaleur (10).

8. Procédé pour fabriquer un échangeur de chaleur selon la revendication 6, dans lequel :
l'étape d'application d'adhésif comprend l'application de l'adhésif (21) sur les surfaces de contact (17) de chacune des ailettes (11 ; 41 ; 51).
